# EUROPEAN PATENT APPLICATION

(11) **EP 0 982 790 A1**
(43) Date of publication of application: **01.03.2000**
(21) Application number: 98907253.3
(22) Date of filing: 17.03.1998
(51) Int. Cl.: H01M 10/40

(54) **LITHIUM ION BATTERY AND METHOD FOR FORMING THE SAME**

(71) Applicant: MITSUBISHI DENKI KABUSHIKI KAISHA, Tokyo 100-8310 (JP)
(72) Inventor: YOSHIDA, Yasuhiro Mitsubishi Denki Kabushiki K., Tokyo 100-8310 (JP); MURAI, Michio Mitsubishi Denki Kabushiki Kaisha, Tokyo 100-8310 (JP); INUZUKA, Takayuki Mitsubishi Denki Kabushiki K., Tokyo 100-8310 (JP); HAMANO, Kouji Mitsubishi Denki Kabushiki Kaisha, Tokyo 100-8310 (JP); SHIOTA, Hisashi Mitsubishi Denki Kabushiki Kaisha, Tokyo 100-8310 (JP); AIHARA, Shigeru Mitsubishi Denki Kabushiki Kaisha, Tokyo 100-8310 (JP); TAKEMURA, Daigo Mitsubishi Denki Kabushiki Kaisha, Tokyo 100-8310 (JP); ARAGANE, Jun Mitsubishi Denki Kabushiki Kaisha, Tokyo 100-8310 (JP); URUSHIBATA, Hiroaki Mitsubishi Denki Kabushiki K., Tokyo 100-8310 (JP)
(74) Representative: Sajda, Wolf E., Dipl.-Phys.
(86) International application number: JP9801107
(87) International publication number: WO9948163

(57) **Abstract**

An object is to realize simplification and improvement of productivity in forming a high-performance lithium ion secondary battery which needs no firm case so that it is possible to reduce the size and weight and to design the shape freely and yet which secures high structural strength and safety.

The method of the invention for forming a lithium ion battery comprises the step of joining a positive electrode (3) having a positive electrode active material layer (32) joined to a positive electrode current collector (31) and a negative electrode (5) having a negative electrode active material layer (52) joined to a negative electrode current collector (51) via a separator (4) with an adhesive resin (6) comprising at least partially a plastic resin being present in parts among them and the step of deforming the adhesive resin (6). The method achieves simplification and improvement of productivity in forming a lithium ion battery.

## Description

### Technical Field

This invention relates to a lithium ion battery. More particularly, it relates to a high-performance secondary battery which can have an arbitrary shape, such as a thin shape, and a method for forming the same.

### Background of the Invention

There has been an extraordinary demand for reduction in size and weight of portable electronic equipment, and the realization relies heavily on improvement of battery performance. To meet the demand, development and improvement of batteries from various aspects have been proceeding. Characteristics required of batteries include a high voltage, a high energy density, safety, and freedom of shape design. Of conventional batteries, lithium ion batteries are the most promising secondary batteries for realizing a high voltage and a high energy density and are still under study for further improvements.

A lithium ion battery in current practical use comprises a positive plate prepared by applying to a current collector an active material comprising powder of lithium-cobalt oxide, etc., a negative plate similarly prepared by applying to a current collector an active material comprising powder of a carbonaceous material. In order for these electrodes to function as a lithium ion battery, there must be an ion conducting layer having no electron conductivity through which lithium ions can migrate between the two electrodes. In general, a separator which is made of a porous film of polyethylene, etc. and is filled with a nonaqueous electrolytic solution is interposed between the electrodes as an ion conducting layer.

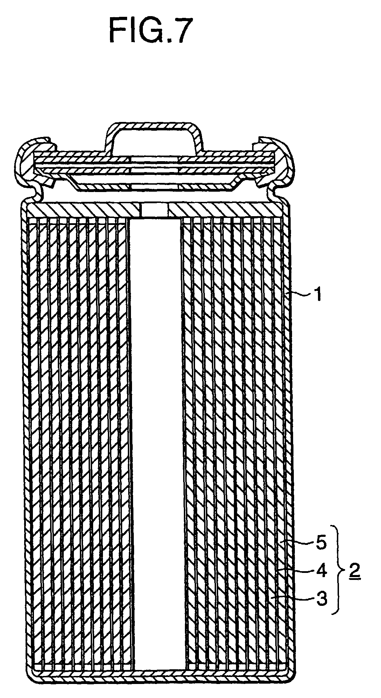

As shown in Fig. 7, a rigid case 1 made of metal, etc. is used for holding a positive electrode 3, a negative electrode 5, and a separator 4 containing an electrolytic solution, etc. Without the case 1, it would be difficult to maintain the joined state of the electrodes 3 and 5 and the separator 4, and the joint might be separated, resulting in deterioration of battery characteristics. However, the case 1 makes the battery heavy and hinders free shape designing. Hence, batteries that do not need such a case 1 have now been under study. One of the subjects in developing batteries needing no case 1 is how to join the electrodes 3 and 5 to the separator 4 interposed therebetween and to maintain the joined state without applying external force.

In this connection, U.S. Patent 5,460,904 discloses a method for forming an ion conducting layer sandwiched in between a positive electrode and a negative electrode, which teaches use of a polymer having a plasticizer mixed therein with at least part of the plasticizer being displaced with an electrolytic solution. However, the method disclosed in U.S. Patent 5,460,904 is not favorable as a production method because a treatment with an organic solvent is involved in the formation of the ion conducting layer, which necessitates a step for removing the organic solvent and equipment for the organic solvent removal.

Further, in order to realize a practically useful lithium ion battery of thin type, it is necessary to develop a battery structure and a method of forming the structure which secures high productivity in joining a positive electrode and a negative electrode while assuring sufficient structural strength and safety as a battery.

### Disclosure of the Invention

A first method for forming a lithium ion battery according to the invention is a method for forming a lithium ion battery comprising a positive electrode having a positive electrode active material layer, a negative electrode having a negative electrode active material layer, and a separator as constituent elements, these constituent elements being impregnated with an electrolytic solution, which comprises the step of joining the positive electrode and the negative electrode via the separator with an adhesive resin containing at least partially a plastic resin being present in parts between the positive electrode and the separator and between the negative electrode and the separator and the step of deforming the adhesive resin.

A second method for forming a lithium ion battery according to the invention is the above-described first method for forming a lithium ion battery, wherein the step of deforming the adhesive resin is carried out by applying at least the pressure that causes the plastic resin to undergo plastic deformation.

According to the first and second methods, since the adhesive resin contains at least partially a plastic resin, (i) drying is not necessary every time the positive electrode, the negative electrode and the separator are joined, (ii) a holding tool for maintaining the joined state is not required, (iii) the step of deforming the adhesive resin does not need to be done one by one and can be effected all at once, (iv) the production equipment can be simplified, which will lead to a great improvement of productivity, and (v) the contact area of the adhesive resin to the positive and negative electrodes and the separator is increased by deforming the plastic resin to enhance the adhesive force so that a completed battery may have a high battery strength enough for practical use.

A third method for forming a lithium ion battery according to the invention is the above-described first method, wherein the plastic resin is a thermoplastic resin. According to this method, since the adhesive resin contains a thermoplastic resin at least partially, the thermoplastic resin is deformed by heating to increase the contact area of the thermoplastic resin to the positive and negative electrodes and the separator. As a result, the adhesive force is enhanced to provide a completed battery with a high battery strength enough for practical use.

A fourth method for forming a lithium ion battery according to the invention is the above-described third method, wherein the step of deforming the adhesive resin is carried out by heating at or above the temperature at which the thermoplastic resin develops flowability. According to this method, adhesive force develops on the thermoplastic resin's flowing. It follows not only that the contact area between the resin and the separator or the positive and negative electrode surfaces increases but that the resin penetrates into the fine pores on the surfaces to produce an anchoring effect. Therefore, a practically useful lithium ion battery having high adhesive strength can be obtained.

A fifth method for forming a lithium ion battery according to the invention is the above-described third method, wherein the thermoplastic resin is infiltrated into the active material layers.

A sixth method for forming a lithium ion battery according to the invention is the above-described third method, wherein the thermoplastic resin is infiltrated into the active material layers by heating.

According to the fifth and sixth methods, the thermoplastic resin melts to shut off the electric current in case of heat generation due to abnormalities such as a short-circuit. Therefore, a highly safe lithium ion battery can be obtained.

A seventh method for forming a lithium ion battery according to the invention is the above-described third method, wherein the step of deforming the adhesive resin is carried out by applying ultrasonic waves under pressure. According to this method, because the resin deforms efficiently by ultrasonic waves application, it is possible to achieve adhesion even under a low pressure or at a low heating temperature. Further, since only the surface portion of the thermoplastic resin is selectively heated, the adhesion can be achieved efficiently.

A first lithium ion battery according to the invention has a laminate electrode body comprising a positive electrode having a positive electrode active material layer joined to a positive electrode current collector, a negative electrode having a negative electrode active material layer joined to a negative electrode current collector, a separator interposed between the positive electrode active material layer and the negative electrode active material layer, and an adhesive resin comprising a plastic resin at least partially, the adhesive resin being interposed between each of the active material layers and the separator and forming voids so that each of the active material layers and the separator may connect thereby. According to this battery structure, because the adhesive resin comprises a plastic resin at least partially, the production equipment can be simplified, which will lead to a great improvement in productivity. Further, since the contact area of the adhesive resin to the positive and negative electrodes and to the separator has been increased by deforming the resin to enhance the adhesive force, the completed battery has a high battery strength enough for practical use.

A second lithium ion battery according to the invention is the above-described first battery wherein the plastic resin is a thermoplastic resin. According to this battery structure, adhesive force develops through the flow of the thermoplastic resin. It follows not only that the contact area between the resin and the separator or the positive and negative electrode surfaces increases but that the resin penetrates into the fine pores on the surfaces to produce an anchoring effect. Therefore, a practically useful lithium ion battery having high adhesive strength can be obtained.

A third lithium ion battery according to the invention is the above-described second battery, wherein the thermoplastic resin has been infiltrated into the active material layers. The battery according to this embodiment is of high safety because the thermoplastic resin melts to shut off the electric current in case of heat generation due to abnormalities such as a short-circuit.

A fourth lithium ion battery according to the invention is the above-described first battery, wherein the void area is from 30 to 90% based on the interface between each of the active material layers and the separator. In this embodiment, with the voids formed between each of the positive and the negative electrodes and the separator being filled with an electrolytic solution, the resistance to ion conduction between each of the positive and the negative electrodes and the separator is reduced sufficiently, which makes use at a high load rate possible and assures adhesive strength sufficient for practical use.

A fifth lithium ion battery according to the invention is the above-described first battery, wherein the distance between each active material layer and the separator is 30 µm or smaller. In this embodiment, where the voids formed between each of the positive and the negative electrodes and the separator are filled with an electrolytic solution, the resistance to ion conduction between the positive and negative electrodes and the separator is reduced sufficiently, which makes use at a high load rate possible.

A sixth lithium ion battery according to the invention is the above-described first battery which has a plurality of the laminate electrode bodies. This embodiment provides a lithium ion battery which is compact and yet has a stable and high capacity.

### Brief Description of the Drawings

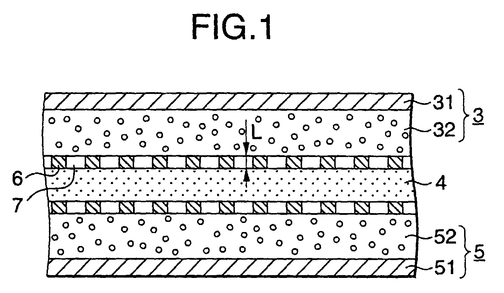

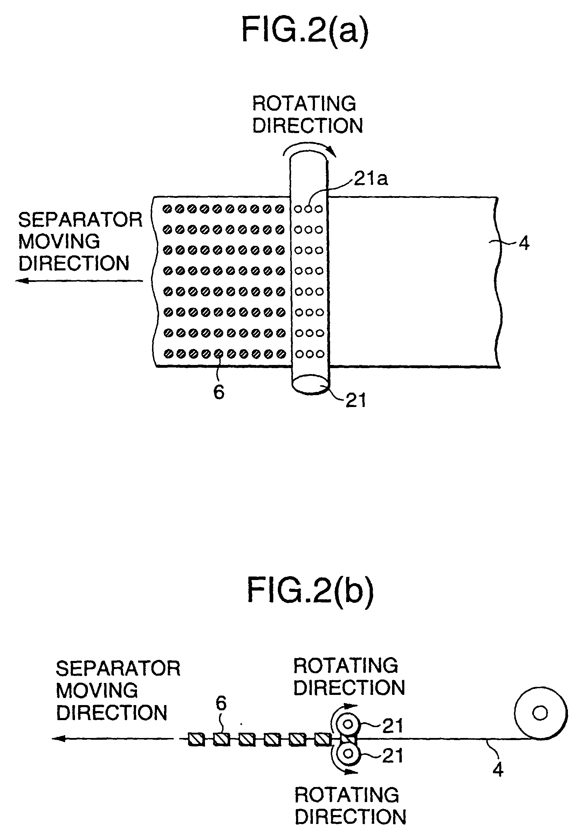

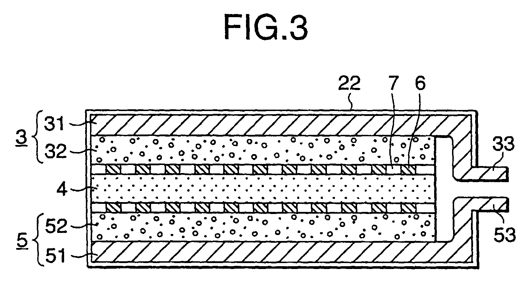

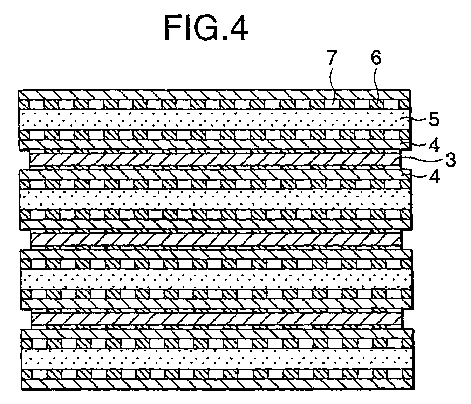

Fig. 1 is a schematic cross section showing the battery structure of a lithium ion battery according to one mode for carrying out the invention. Fig. 2 schematically illustrates a method for applying an adhesive resin by means of a coater according to one mode for carrying out the invention. Fig. 3 is a schematic cross section showing a lithium ion battery according to one mode for carrying out the invention. Figs. 4, 5, and 6 are each a schematic cross section showing the battery structure of a lithium ion battery according to another mode for carrying out the invention. Fig. 7 is a schematic cross section of a conventional lithium ion battery.

### Best Mode for Carrying out the Invention

The invention is applied to a battery structure having a positive electrode, a negative electrode, and an ion conducting layer interposed therebetween. While the modes for carrying out the invention hereinafter described are concerned chiefly with a battery of single electrode body type having a single unit electrode body composed of a positive electrode, an ion conducting layer, and a negative electrode, they also apply to a laminated battery body having a stack of such unit electrode bodies.

Fig. 1 is a schematic cross section illustrating the battery structure, i.e., the unit electrode body, of a lithium ion battery according to a mode for carrying out the invention. In the Figure, numeral 3 indicates a positive electrode having a positive electrode active material layer 32 joined to a positive electrode current collector 31; numeral 5 is a negative electrode having a negative electrode active material layer 52 joined to a negative electrode current collector 51; numeral 4 is a separator interposed between the positive electrode 3 and the negative electrode 5 which holds a nonaqueous electrolytic solution containing lithium ions and functions as an ion conducting layer; and numeral 6 indicates an adhesive resin comprising a plastic resin at least partially, which is applied on the interfaces between the separator 4 and the positive electrode active material layer 32 and the negative electrode active material layer 52 in parts, for example, in a dotted, striped or checked pattern to join each of the active material layers 32 and 52 to the separator 4. Numeral 7 indicates voids by which the positive electrode active material layer 32 and the negative electrode active material layer 52 are connected to the separator 4. A nonaqueous electrolytic solution containing lithium ions is held in the voids 7, the separator 4, and the active material layers 32 and 52. The plastic resin is a resin which is solid and self-adhesive at ambient temperature and deforms on heat or pressure application.

A lithium ion battery having the above-mentioned structure is formed by, for example, the following method. The method for forming a battery according to the invention comprises applying an adhesive resin 6 in parts between a positive electrode 3 and a separator 4 and between a negative electrode 5 and the separator 4 and deforming the adhesive resin 6 by the method described hereunder, for example, by pressure or heat application. By the deformation of the adhesive resin 6, the voids 7 between the electrodes 3 and 5 and the separator 4 are pressed to reduce their depth L to a prescribed value.

Any adhesive resin that does not dissolve in an electrolytic solution can be used in the invention as an adhesive resin 6. The plastic resin which is contained in the adhesive resin 6 is not particularly limited. Examples of useful plastic resins include polyolefins, polyglycols, and silicon resins. The adhesive resin 6 may further contain organic or inorganic powder, fiber, etc.

The total area of the voids 7 which are created by the partly applied adhesive resin 6 is preferably 30 to 90%, particularly about 60%, of the interface between each of the active material layers 32 and 52 and the separator 4. With this area ratio being less than 30%, the electrical connection among the active material layers 32 and 52 and the separator 4 would be insufficient, resulting in increased resistance to ion conduction between the electrodes 3 and 5, which makes it difficult to obtain sufficient battery characteristics. If the area ratio exceeds 90%, the adhesion between the electrodes 3 and 5 and the separator 4 is insufficient, causing separation.

The depth of the voids 7 created between each of the active material layers 32 and 52 and the separator 4, i.e., the distance L between each of the active material layers 32 and 52 and the separator 4 is subject to variation depending on the ion conductivity of the electrolytic solution used. In case where the electrolytic solution used has an ion conductivity of about 10⁻² S/cm as is commonly employed, the distance L is desirably 30 µm or smaller. The distance L being 30 µm or less, the resistance to ion conduction between the active material layer 32 or 52 and the separator 4 is sufficiently small, making it feasible to use the resulting battery at a high load rate similarly to a conventional battery having an exterior case. The depth L of the voids 7 is more desirably 10 µm or smaller. With the depth L being 10 µm or smaller, diffusion of reaction species proceeds more easily to further reduce the ion conduction resistance. In addition, it is said that the active material layers 32 and 52 where an electrode reaction takes place has on their surface a diffusion layer of several microns in depth. If the depth L of the voids 7 is regulated to several microns or less, it is considered that diffusion of lithium ions proceeds most easily. Therefore, it is the most desirable that the depth L of the voids 7 be several microns or less.

The adhesive resin 6 is partly disposed between the positive electrode 3 and the negative electrode 5 by distributing the resin in the form of powder, threads, net, perforated film, etc. on one or both of the surfaces of the positive electrode 3 or the negative electrode 5 and of the separator 4 that are to face each other when assembled into a battery in such a manner that the entire area of the surfaces may not be completely covered with the resin. Specifically, a method by using a coater can be adopted. This is a coating method in which, as shown in the perspective view of Fig 2(a) and the side view of Fig. 2(b), a molten resin 6 is picked up with a rotating roll 21 having depressions 21a in dots and then transferred to a sheet (for example, a sheet separator 6). The manner of applying the adhesive is not particularly limited, and a spray coating method and a roll coating method in which a molten resin is extruded through small holes of a roll are also employable. Distributed without completely covering the entire surface, the adhesive resin forms voids 7 in which a liquid electrolyte can be held between the electrodes 3 and 5 and the separator 4. A liquid electrolyte being held in the voids 7, the resistance to ion conduction between the electrodes 3 and 5 can be reduced to such a level as in a conventional battery using an exterior case. In addition, since the adhesive 6 adheres the electrodes 3 and 5 and the separator 4 to each other, the electrodes 3 and 5 can be brought into contact without the aid of an exterior case.

The adhesion can be carried out by superposing the positive electrode 3, the separator 4, and the negative electrode 5 with the adhesive resin 6 partly applied among them and applying to the laminate body at least the pressure which causes the adhesive resin 6 to undergo plastic deformation. The step of pressure application can be done at any time after completion of superposition. This step is effective in enlarging the contact area of the adhesive resin 6 to the electrodes 3 and 5 and to the separator 4 thereby to enhance the adhesive force of the adhesive resin 6. As a result, there is obtained a completed battery with a sufficient battery strength enough to withstand practical use. It is desirable that the strength relies on the anchoring effect produced by the adhesive resin 6 penetrating into the fine pores on the surfaces of the electrodes 3 and 5 and the separator 4. Even where the strength relies merely on the self-adhesiveness of the adhesive resin 6, sufficient strength for battery formation could be secured only if the contact area between the adhesive resin 6 and the surfaces of the electrodes 3 and 5 is large enough. This step is also necessary for regulating the thickness of the adhesive resin 6 interposed between the electrodes 3 and 5. It is unfavorable that the adhesive resin 6 has too large a thickness, which results in reduction of charge capacity. The thickness is preferably as thin as is consistent with adhesive force.

The above-described manner of adhesion is advantageous in that (i) drying is not necessary every time the electrodes 3 and 5 and the separator 4 are joined, (ii) a holding tool for maintaining the joined state is not required, (iii) the step of applying at least the pressure causing plastic deformation of the resin does not need to be conducted successively and can be effected all at once, and (iv) a solvent to be used is reduced in amount. As a result, the production equipment can be simplified, which leads to greatly improved productivity.

The pressure application for adhesion is followed by drying, and a current collecting tabs 33 and 53 are connected to the resulting laminate electrode body 8 by spot welding, etc. The laminate electrode body is inserted into a cylinder 22 made of an aluminum-laminated film. An electrolytic solution is poured into the cylinder, and the opening of the aluminum-laminated film 22 is sealed to complete a lithium ion battery having a unit electrode body (see Fig. 3).

A nonaqueous liquid electrolyte containing lithium ions that has been employed in conventional batteries can be used as a liquid electrolyte in the electrolytic solution which serves as an ion conductor. Examples of useful solvents for the liquid electrolyte include an ester solvent group, such as ethylene carbonate, propylene carbonate, dimethyl carbonate, and diethyl carbonate; an ether solvent group, such as dimethoxyethane, diethoxyethane, diethyl ether, and dimethyl ether; and a mixed solvent consisting of two or more members selected from among the same group of solvents or from among different groups of solvents. Examples of useful electrolyte salts used in the electrolytic solution are LiPF₆, LiAsF₆, LiClO₄, LiBF₄, LiCF₃SO₃, LiN(CF₃SO₂)₂, LiC(CF₃SO₂)₃, and LiN(C₂F₅SO₂)₂.

The active material layers 32 and 52 are formed by mixing a powdered positive electrode active material and a powdered negative electrode active material with the respective binder resins into paste and applying the paste to a positive and a negative electrode current collector 31 and 51, respectively, followed by drying.

The binder resins which can be used for binding an active material into an electrode layer include those which neither dissolve in an electrolytic solution nor undergo electrochemical reaction inside the battery. For example, polymers or copolymers of vinylidene fluoride, ethylene fluoride, acrylonitrile, ethylene oxide, etc. and ethylenepropylenediamine rubber can be used.

The active materials which can be used in the positive electrode 3 include complex oxides of lithium and a transition metal, such as cobalt, nickel or manganese; chalcogenides containing lithium; or complex oxides of these compounds; and the above-mentioned complex oxides, Li-containing chalcogenides or complex oxides thereof which contain a trace amount of various dopant elements. Graphite is added to these substances as an electron conductor. Preferred active materials for use in the negative electrode 5 include carbonaceous compounds, such as graphite, graphitizing carbon, non-graphitizing carbon, polyacene, and polyacetylene; and aromatic hydrocarbon compounds having an acene structure, such as pyrene and perylene. The negative electrode active material is not limited to these examples, and any other substances capable of intercalating and disintercalating lithium ions, which are necessary for a battery operation, can be used. These active materials are used in a particulate form. Particles having a particle size of 0.3 to 20 µm can be used. A particularly preferred particle size is 0.3 to 5 µm. Carbon fiber is also useful as a negative electrode active material 52. Where the particle size is too small, too large a surface area of the active material will be covered with the adhesive on adhesion, and lithium ion intercalation and disintercalation are not carried out efficiently in charging and discharging, resulting in reduction of battery characteristics. If the particle size is too large, it is not easy to form the active material mixture into a thin film, and the packing density is reduced.

Any metal stable in the inside of a battery can be used as a current collector 31 or 51. Aluminum is preferred for the positive electrode 3, and copper is preferred for the negative electrode 5. The current collectors 31 and 51 can be foil, net, expanded metal, etc. Foil is preferred for obtaining smoothness of the electrode.

The separator 4 is not particularly limited, and any insulating porous film, net, nonwoven fabric, etc. can be used as long as it has sufficient strength. A porous film made of polypropylene, polyethylene, etc. is preferred from the standpoint of adhesion and safety. In order to secure ion conduction, the separator 4 should have through-holes. The open area ratio of the through-holes to the total area is desirably at least 10%, preferably 30% or more.

While in the above-described method adhesion is achieved by plastic deformation of the adhesive resin, adhesion may be carried out by using an adhesive resin 6 containing a thermoplastic resin and heating the adhesive resin at or above the temperature at which the thermoplastic resin deforms easily. Any means for heating, such as a hot plate, an oven or an infrared heater, can be chosen.

The heating can be at or above the temperature at which the thermoplastic resin gets flowable. In this case, the contact area between the resin and the separator 4 or the surfaces of the electrodes 3 and 5 increases and, in addition, the resin penetrates into the fine pores of the surfaces to produce an anchoring effect. Where the thermoplastic resin is highly viscous, it is sometimes desirable, while not essential, to apply pressure during heating.

Infiltration of the adhesive resin 6 containing the thermoplastic resin into the active material layers 32 and 52 produces the effect that the resin melts to shut off the electric current in case the temperature should elevate due to abnormalities such as an internal shortage. Infiltration of the adhesive resin 6 containing the thermoplastic resin into the active material layers 32 and 52 can be achieved either by pressure application or heat application.

Any thermoplastic resin can be used here as long as it has a melting point of 200°C or lower and is insoluble in an electrolytic solution. The thermoplastic resin may contain high-melting components, inorganic matter, etc. unless such may not impair flowability on heating.

Because such a separator made of polypropylene or polyethylene as is commonly employed melts on heating to cause clogging, it is necessary to avoid overheating the separator itself. In using such a separator, it is desirable to choose a thermoplastic resin which gets flowable at a low temperature, or it is desirable that the thermoplastic resin is applied to the electrodes and only the electrodes are heated followed by superposition.

Where the adhesive resin 6 containing the thermoplastic resin is used, adhesion may be carried out by applying ultrasonic waves under pressure. Ultrasonic waves cause the resin to deform efficiently, making adhesion feasible even under low pressure or at low temperature. Further, ultrasonic waves application produces the effect that the portion of the thermoplastic resin in contact with the electrodes is selectively heated so that the adhesion can be achieved very efficiently.

The heating step is conducted at any time after all the electrodes are superposed. This step is effective in sufficiently increasing the heat resistance of the completed battery.

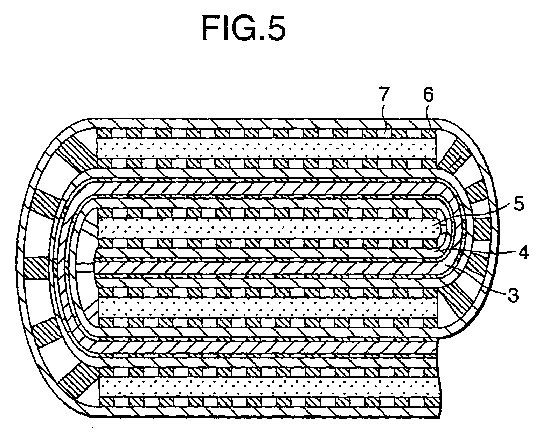

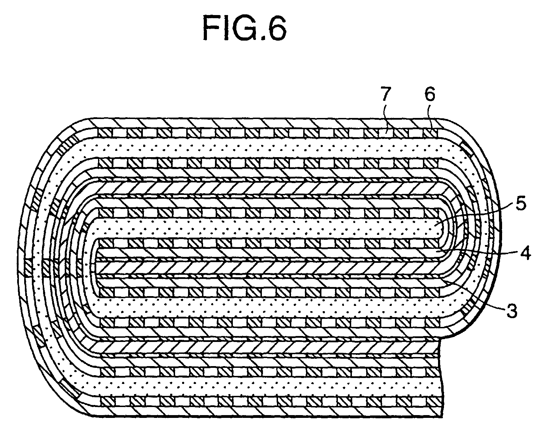

While the modes for carrying out the invention have been described with particular reference to a battery having a single unit laminate electrode body 8, they are applicable to batteries of multilayer type having a plurality of the unit lamiante electrode bodies. Use of a plurality of the unit electrode bodies provides a lithium ion battery that is compact and yet has a stable and large battery capacity. For example, a battery of multilayer type can have the structure shown in Fig. 4 in which positive electrodes 3 and negative electrodes 5 alternate with a cut sheet of a separator 4 being interposed between every positive electrode and every negative electrode; the structures shown in Figs. 5 and 6 in which a positive electrode 3 and a negative electrode 5 are rolled up with a band of a separator 4 interposed therebetween; and a structure (not shown) in which a positive electrode 3 and a negative electrode 5 are inserted alternately in the folds of a folded band of a separator 4. The method for producing the multilayer type batteries shown in Figs. 4 to 6 will be described in more detail in Examples hereinafter given.

Examples are given below to illustrate the invention in greater detail, but the invention is by no means limited thereto.

### EXAMPLE 1

Eighty-seven percents by weight of LiCoO₂, 8 wt% of graphite powder and, as a binder resin therefor, 5 wt% of polyvinylidene fluoride were mixed to prepare a positive electrode active material paste. The paste was applied to a 20 µm-thick aluminum foil current collector with a doctor blade to a coating thickness of about 100 µm to form a positive electrode.

Ninety-five weight percents of Mesophase Microbead Carbon (produced by Osaka Gas Co., Ltd.) and 5 wt% of polyvinylidene fluoride as a binder resin were mixed to prepare a negative electrode active material paste. The paste was applied to a 12 µm-thick copper foil current collector with a doctor blade to a thickness of about 100 µm to make a negative electrode.

A rectangle of 5 cm by 4 cm was cut out each of the positive electrode and the negative electrode, and a current collecting terminal (tab) was attached to each cut piece of the positive electrode and the negative electrode. A hot-melt adhesive of SIS type (AK-1, produced by Kanebo NSC K.K.; softening point: about 100°C) was partly applied onto the positive electrode and the negative electrode by spraying in an amount of about 8 g per m². The adhesive-coated positive and negative electrodes were brought into contact with a separator (Cell Guard #2400, produced by Hoechst Celanese) interposed therebetween whereby the positive electrode, the separator, and the negative electrode were bonded together through the self-adhesiveness of the hot-melt adhesive. The hot-melt adhesive provided voids of about 50 µm in thickness between the positive electrode and the separator and between the negative electrode and the separator. The resulting laminate was thoroughly dried in vacuo. After drying, the adhesive layers were pressed under a pressure of 5 g per cm² at room temperature to reduce the voids between the positive positive and the separator and between the negative electrode and the separator.

After drying, the resulting electrode body was inserted into a cylinder made of an aluminum-laminated film and dried thoroughly. An electrolytic solution prepared from ethylene carbonate and 1,2-dimethoxyethane as solvents and lithium hexafluorophosphate as an electrolyte was poured into the electrode body. The aluminum-laminated film was sealed to complete a battery.

The battery thus prepared had battery characteristics in terms of weight energy density of 70 Wh/kg at a current value 1C. Even after 200 charge and discharge cycles at a current value C/2, as high as about 90% of the initial charge capacity was retained.

### EXAMPLE 2

A butene-propylene copolymer (Nitta Gelatin K.K.; softening point: 84°C) was applied to a positive electrode and a negative electrode prepared in the same manner as in Example 1, to each of which a current collecting terminal was attached, in a dotted pattern by means of a coater (CP3000, manufactured by MELTEX K.K.) in an amount of about 9 g per m². The positive electrode and the negative electrode were joined together with a separator therebetween and pressed under a pressure of 5 g/cm² at 80°C for 1 minute.

The resulting electrode body was inserted into a cylinder made of an aluminum-laminated film and dried thoroughly. An electrolytic solution prepared from ethylene carbonate and 1,2-dimethoxyethane as solvents and lithium hexafluorophosphate as an electrolyte was poured into the electrode body. The aluminum-laminated film was sealed to complete a battery.

The battery thus prepared had battery characteristics in terms of weight energy density of 70 Wh/kg at a current value 1C. After 200 charge and discharge cycles at a current value C/2, about 80% of the initial charge capacity was secured.

### EXAMPLE 3

A butene-propylene copolymer (Nitta Gelatin K.K.; softening point: 84°C) was applied to a positive electrode and a negative electrode prepared in the same manner as in Example 1, to each of which a current collecting terminal was attached, in a dotted pattern by means of a coater (CP3000, manufactured by MELTEX K.K.) in an amount of about 15 g per m². The positive electrode and the negative electrode were joined together with a separator (Cell Guard #2400, produced by Hoechst Celanese) therebetween and, in this joined state, heated at 90°C for 3 minutes, followed by cooling.

The resulting electrode body was inserted into a cylinder made of an aluminum-laminated film and dried thoroughly. An electrolytic solution prepared from ethylene carbonate and 1,2-dimethoxyethane as solvents and lithium hexafluorophosphate as an electrolyte was poured into the electrode body. The aluminum-laminated film was sealed to complete a battery.

The battery thus prepared had battery characteristics in terms of weight energy density of 65 Wh/kg at a current value 1C. After 200 charge and discharge cycles at a current value C/2, about 80% of the initial charge capacity was secured.

### EXAMPLE 4

An ethylene-methyl methacrylate-maleic anhydride copolymer ("Bondyne" produced by Sumitomo Chemical Co., Ltd.; softening point: 100°C) was applied to a positive electrode and a negative electrode prepared in the same manner as in Example 1, to each of which a current collecting terminal was attached, in a dotted pattern by means of a coater (CP3000, manufactured by MELTEX K.K.) in an amount of about 8 g per m². The positive electrode and the negative electrode were joined together with a separator (Cell Guard #2400, produced by Hoechst Celanese) and bonded by pressing under a pressure of 20 g/cm² at 80°C for 1 minute.

The resulting electrode body was inserted into a cylinder made of an aluminum-laminated film and dried thoroughly. An electrolytic solution prepared from ethylene carbonate and 1,2-dimethoxyethane as solvents and lithium hexafluorophosphate as an electrolyte was poured into the electrode body. The battery body was heated in an oven at 70°C for about 1 hour, whereby the space between the positive electrode and the separator and the space between the negative electrode and the separator were narrowed to about 10 µm. The aluminum-laminated film was sealed to complete a battery.

The battery thus prepared had battery characteristics in terms of weight energy density of 78 Wh/kg at a current value 1C. After 200 charge and discharge cycles at a current value C/2, about 80% of the initial charge capacity was secured.

### EXAMPLE 5

An ethylene-methyl methacrylate-maleic anhydride copolymer ("Bondyne" produced by Sumitomo Chemical Co., Ltd.; softening point: 100°C) was applied to a positive electrode and a negative electrode prepared in the same manner as in Example 1, to each of which a current collecting terminal was attached, in a dotted pattern by means of a coater (CP3000, manufactured by MELTEX K.K.) in an amount of about 8 g per m². Both the electrodes were heated in an oven at 110°C for 1 minute and then bonded together with a separator (Cell Guard #2400, produced by Hoechst Celanese) interposed therebetween.

The resulting electrode body was inserted into a cylinder made of an aluminum-laminated film and dried thoroughly. An electrolytic solution prepared from ethylene carbonate and 1,2-dimethoxyethane as solvents and lithium hexafluorophosphate as an electrolyte was poured into the electrode body. The aluminum-laminated film was sealed to complete a battery.

The battery thus prepared had battery characteristics in terms of weight energy density of 76 Wh/kg at a current value 1C. After 200 charge and discharge cycles at a current value C/2, about 80% of the initial charge capacity was secured.

### EXAMPLE 6

Rectangular electrodes having a size of 5 cm by 4 cm which were prepared in the same manner as in Example 1 and to which a current collecting terminal was attached were used. Polyethylene powder was uniformly scattered on the positive electrode in an amount of about 10 g per m², and a separator (Cell Guard #2400, produced by Hoechst Celanese) was superposed thereon. Polyethylene powder was uniformly scattered on the separator in an amount of about 10 g per m². The negative electrode was superposed thereon and united into one body by means of an ultrasonic welding machine. Care was taken to minimize the ultrasonic wave output per unit area so as not to destroy the electrodes.

The resulting electrode body was inserted into a cylinder made of an aluminum-laminated film and dried thoroughly. An electrolytic solution prepared from ethylene carbonate and 1,2-dimethoxyethane as solvents and lithium hexafluorophosphate as an electrolyte was poured into the electrode body. The aluminum-laminated film was sealed to complete a battery.

The battery thus prepared had battery characteristics in terms of weight energy density of 62 Wh/kg at a current value 1C. After 100 charge and discharge cycles at a current value C/2, about 80% of the initial charge capacity was secured.

The battery thus prepared had battery characteristics in terms of weight energy density of 60 Wh/kg. Even after 100 charge and discharge cycles at a current value C/2, about 60% of the initial charge capacity was secured.

### EXAMPLE 7

Example 7 shows formation of a lithium ion battery having the flat multilayer type battery body shown in Fig. 4.

Positive electrodes and negative electrodes were prepared from the same materials in the same manner as in Example 1. Two rolls of porous polypropylene film having a width of 12 cm and a thickness of 25 µm (Cell Guard #2400, produced by Hoechst) were unrolled as separators, and an adhesive resin H-6825 (a trade name, produced by Nitta Gelatin K.K.) was applied in a dotted pattern by means of the coater to a side of each separator. A plurality of the positive electrodes (or the negative electrodes) were sandwiched in between the coated sides of the two separators and temporarily fixed therein. The positive electrode (or the negative electrode) temporarily fixed in between the separators was cut to sizes. The above-described adhesive resin was applied in dots on one of the paired separators of a cut piece by means of a coater, and the negative electrode (or the positive electrode) was superposed on the coated separator. A coated side of another pair of separators having the positive electrode (or the negative electrode) temporarily fixed therebetween was stuck thereto. The above-described adhesive resin was applied in dots on the uncoated side of the separator by means of the coater, and the negative electrode (or the positive electrode) was superposed thereon. These steps were repeated to build up a plurality of laminate electrode bodies in multilayers. The resulting battery body having a stack of the laminate electrode bodies was pressed under a pressure of 100 g per cm².

The resulting battery body was inserted into a cylinder made of an aluminum-laminated film and dried thoroughly. An electrolytic solution prepared from ethylene carbonate and 1,2-dimethoxyethane as solvents and lithium hexafluorophosphate as an electrolyte was poured into the electrode body. The aluminum-laminated film was sealed to complete a battery.

### EXAMPLE 8

Example 8 shows formation of a lithium ion secondary battery having the flat roll type laminated battery body shown in Fig. 5.

Positive electrodes and negative electrodes were prepared in the same manner as in Example 1. A current collecting terminal was attached to the end of every electrode by spot welding. The entire area of one side of a separator (Cell Guard #2400, produced by Hoechst Celanese) and a part of the other side of the separator were spray-coated with AK-1 (produced by Kanebo NSC K.K.; softening point: about 100°C) to a coating weight of about 10 g per m². The end of the separator was folded back at a prescribed length while inserting one of the positive (or negative) electrodes into the fold. One of the negative (or positive) electrodes was stuck to the coated and folded part of the separator at the position facing to the previously inserted positive electrode (or negative electrode) and wrapped in the separator by rolling. The separator was further rolled each time the positive electrode (or negative electrode) and the negative electrode (or the positive electrode) were alternately inserted so as to face each other via the separator while applying the resin in a dotted pattern on the uncoated side of the separator (opposite to the side entirely coated with the resin) and finally made into an ellipsoidal shape.

The resulting rolled battery body having an ellipsoidal shape was pressed under a pressure of about 100 g per cm² to bond the electrodes to obtain a flat multilayer roll type battery body as shown in Fig. 5.

The current collecting tabs connected to every positive or negative current collector 31 or 51 were spot welded together among the positive electrodes and among the negative electrodes to electrically connect the multilayer type battery body in parallel. The multilayer battery body was inserted into a cylinder made of an aluminum-laminated film and dried thoroughly. An electrolytic solution prepared from ethylene carbonate and 1,2-dimethoxyethane as solvents and lithium hexafluorophosphate as an electrolyte was poured into the electrode body. The aluminum-laminated film was sealed to complete a lithium ion secondary battery.

### EXAMPLE 9

While Example 8 has shown an embodiment in which the separator 4 is rolled up, the battery structure may be a flat folded type multilayer battery structure that is prepared by repeatedly folding a pair of separators 4 of band form having a positive electrode (or a negative electrode) joined therebetween while sticking a cut piece of a negative electrode (or a positive electrode) into each fold.

### EXAMPLE 10

Example 10 shows a method for preparing a lithium ion secondary battery having the flat roll type multilayer battery body shown in Fig. 6, in which electrodes and separators are rolled up simultaneously unlike Example 11.

A positive electrode and a negative electrode were prepared from the same materials in the same manner as in Example 8. Two rolls of porous polypropylene film having a width of 12 cm and a thickness of 25 µm (Cell Guard #2400, produced by Hoechst) were unrolled as separators 4, and an adhesive resin H-6825 (a trade name, produced by Nitta Gelatin K.K.) was applied in a dotted pattern by means of the coater to one side of each separator to the same coating weight as in Example 8. The positive electrode (or the negative electrode) was joined in between the coated sides of the two separators. The outer sides of the paired separators having the positive electrode (or the negative electrode) therebetween were coated with the adhesive resin by means of the coater.

The negative (or positive) electrode of band form was set on one of the paired separators having the positive (or negative) electrode therebetween with a prescribed length of its starting end sticking out over the end of that separator. The sticking end of the negative (or positive) electrode was folded back and stuck to wrap the positive (or negative) electrode in. Then, the positive (or negative) electrode with separators was folded and stuck so that the negative (or positive) electrode might be wrapped in, and the positive (or negative) electrode with separators was rolled up into an ellipsoidal shape so that the folded negative (or positive) electrode might be wrapped in. Thereafter, the whole structure was fusion bonded by means of a heat roll to obtain a battery body having the roll type multilayer structure shown in Fig. 6.

The current collecting tabs connected to the positive and the negative current collectors 31 and 51 were spot welded together among the positive electrodes and among the negative electrodes to electrically connect the multilayer battery body in parallel. The multilayer battery body was inserted into a cylinder made of an aluminum-laminated film and dried thoroughly. An electrolytic solution prepared from ethylene carbonate and 1,2-dimethoxyethane as solvents and lithium hexafluorophosphate as an electrolyte was poured into the electrode body. The aluminum-laminated film was sealed to complete a lithium ion secondary battery.

While the foregoing Examples have illustrated the embodiments in which the adhesive resin was applied to the separator or the active material layers 32 and 52, the adhesive resin may be applied to both the separator and the active material layers.

### Industrial Applicability

The present invention brings about simplification and therefore improvement of productivity in forming a high-performance secondary battery for use in portable electronic equipment, such as portable personal computers and cellular phones, which can have reduced size and weight, an arbitrary shape, high structural strength, and safety.

## Claims

1. A method for forming a lithium ion battery comprising a positive electrode having a positive electrode active material layer, a negative electrode having a negative electrode active material layer, and a separator as constituent elements, the constituent elements being impregnated with an electrolytic solution, which is characterized by comprising the step of joining the positive electrode and the negative electrode via the separator with an adhesive resin containing at least partially a plastic resin being present in parts between the positive electrode and the separator and between the negative electrode and the separator and the step of deforming the adhesive resin.

2. A method for forming a lithium ion battery according to claim 1, characterized in that the step of deforming the adhesive resin is carried out by applying at least the pressure that causes the plastic resin to undergo plastic deformation.

3. A method for forming a lithium ion battery according to claim 1, characterized in that the plastic resin is a thermoplastic resin.

4. A method for forming a lithium ion battery according to claim 3, characterized in that the step of deforming the adhesive resin is carried out by heating at or above the temperature at which the thermoplastic resin develops flowability.

5. A method for forming a lithium ion battery according to claim 3, characterized in that the thermoplastic resin is infiltrated into the active material layers.

6. A method for forming a lithium ion battery according to claim 3, characterized in that the thermoplastic resin is infiltrated into the active material layers by heating.

7. A method for forming a lithium ion battery according to claim 3, characterized in that the step of deforming the adhesive resin is carried out by applying ultrasonic waves under pressure.

8. A lithium ion battery characterized by having a laminate electrode body comprising a positive electrode having a positive electrode active material layer joined to a positive electrode current collector, a negative electrode having a negative electrode active material layer joined to a negative electrode current collector, a separator interposed between the positive electrode active material layer and the negative electrode active material layer, and an adhesive resin comprising a plastic resin at least partially, the adhesive resin being interposed between each of the active material layers and the separator and forming voids so that each of the active material layers and the separator may connect thereby.

9. A lithium ion battery according to claim 8, characterized in that the plastic resin is a thermoplastic resin.

10. A lithium ion battery according to claim 8, characterized in that the thermoplastic resin is infiltrated into the active material layers.

11. A lithium ion battery according to claim 8, characterized in that the area of the voids is from 30 to 90% based on the interface between each of the active material layers and the separator.

12. A lithium ion battery according to claim 8, characterized in that the distance between each of the active material layers and the separator is 30 µm or smaller.

13. A lithium ion battery according to claim 8, characterized by having a plurality of the laminate electrode bodies.
